# EUROPÄISCHE PATENTSCHRIFT

(11) **EP 2 214 912 B1**
(45) Veröffentlichungstag und Bekanntmachung des Hinweises auf die Patenterteilung: **25.11.2015**
(21) Anmeldenummer: 08856485.1
(22) Anmeldetag: 08.12.2008
(51) Int. Cl.: B41M 3/14, B32B 27/18, B42D 25/00, B42D 25/41

(54) **POLYMERSCHICHTVERBUND FÜR EIN SICHERHEITS- UND/ODER WERTDOKUMENT**
POLYMER LAYER COMPOSITE FOR A SECURITY AND/OR VALUABLE DOCUMENT
COMPOSITE DE COUCHES POLYMÈRES POUR UN DOCUMENT DE SÉCURITÉ ET/OU UN DOCUMENT DE VALEUR

(30) Priorität: 07.12.2007 DE 102007059747
(43) Veröffentlichungstag der Anmeldung: 11.08.2010
(60) Teilanmeldung: 15002848.8
(73) Patentinhaber: Bundesdruckerei GmbH, 10958 Berlin (DE); Covestro Deutschland AG, 51373 Leverkusen (DE)
(72) Erfinder: HAGEMANN, Michael, 13465 Berlin (DE); MATHEA, Arthur, 14199 Berlin (DE); MUTH, Oliver, 12277 Berlin (DE); PFLUGHOEFFT, Malte, 13347 Berlin (DE); FISCHER, Jörg, 13053 Berlin (DE); PUDLEINER, Heinz, 47800 Krefeld (DE)
(74) Vertreter: Jungblut, Bernhard Jakob
(86) Internationale Anmeldenummer: PCT/DE2008/002013
(87) Internationale Veröffentlichungsnummer: WO 2009/071067

(56) Entgegenhaltungen:
- WO-A-02/27647
- WO-A-2005/058608
- WO-A-2005/098746
- WO-A-2006/102700
- US-A1- 2003 183 695
- US-A1- 2004 011 874

## Beschreibung

### Gebiet der Erfindung

Die Erfindung betrifft ein Verfahren zur Herstellung eines Polymerschichtverbunds wobei der Polymerschichtverbund eine Mehrzahl von Polymerschichten aufweist und wobei zumindest eine Polymerschicht eine lasersensitive Komponente enthält, wobei auf zumindest eine der Polymerschichten eine erste personalisierte Information mittels eines Tintenstrahldruckverfahrens als farbige Tintenstrahl-Druckschicht aufgebracht wird, wobei mittels Lasergravur eine zweite personalisierte Information in den erhaltenen Polymerschichtverbund eingebracht wird, und wobei die Polymerschicht mit farbiger Tintenstrahl-Druckschicht zusammen mit den weiteren Polymerschichten zusammengefügt wird. Die Erfindung betrifft des Weiteren einen demgemäß erhältlichen Polymerschichtverbund, ein Sicherheits- und/oder Wertdokument mit einem solchen Polymerschichtverbund sowie ein Verfahren zur Herstellung eines solchen Sicherheits- und/oder Wertdokuments.

### Stand der Technik und Hintergrund der Erfindung.

Als Personalisierung eines Sicherheits- und/oder Wertdokuments wird ein Vorgang bezeichnet, bei welchem personalisierte Informationen, i.e. für eine bestimmte Person, welche als Trägerin oder Inhaberin des Sicherheits- und/oder Wertdokuments bestimmt ist, individuelle Informationen, beispielsweise Bildinformationen, wie Passbild, Fingerabdruck etc., Zeichenfolgen, wie Namen, Adresse, Wohnort etc., auf bzw. in dem betreffenden Sicherheits- und/oder Wertdokument angebracht werden. Dies kann beispielsweise in Form von farbigen oder Schwarz/Weiß Bedruckungen oder Lasergravur erfolgen. Alternativ oder zusätzlich können diese oder andere personen-individuellen Informationen aber auch in einem in dem Sicherheits- und/oder Wertdokument integrierten elektronischen Schaltkreis gespeichert sein, wobei dann der elektronische Schaltkreis bzw. die darin enthaltenen Informationen durch authorisierte Personen ausgelesen werden können.

Die Personalisierung kann zentral oder dezentral erfolgen. Bei der zentralen Personalisierung werden die personalisierten Informationen erhoben und einem Hersteller des Sicherheits- und/oder Wertdokuments übermittelt. Dieser bringt dann die personalisierten Informationen in bzw. an dem Sicherheits- und/oder Wertdokument im Zuge dessen Produktion und Fertigstellung an. Bei der dezentralen Personalisierung wird von Hersteller des Sicherheits- und/oder Wertdokuments ein nicht-personalisierter Rohling an eine Stelle geliefert, welche die Erhebung der personalisierten Informationen durchführt und diese dann selbst an bzw. in dem Rohling anbringt und so das Sicherheits- und/oder Wertdokument, ggf. noch durch abschließende Anbringung einer obersten Schutzfolie ergänzt, fertigstellt.

Aus den Literaturstellen DE 2 907 004 C2, DE 3 151 407 C1 und EP 0 219 011 B1 sind verschiedene Verfahren zur Laserbeschriftung von Sicherheits- und/oder Wertdokumenten bekannt. Mit solchen Verfahren können personalisierte Informationen in innenliegende Schichten eines Sicherheits- und/oder Wertdokuments eingebracht werden und sind so sehr gut gegen Manipulationen gesichert. Allerdings ist mittels dieser Verfahren nicht die Einbringung von farbigen personalisierten Informationen, wie z.B. von Passbildern, möglich.

Aus den Literaturstellen US 6,685,312, US 6,932,527, US 6,979,141, US 7,037,013, US 6,022,429 und US 6,264,296 sind verschiedene Verfahren zur Herstellung von Sicherheits- und/oder Wertdokumenten bekannt, wobei auf einen fertigen Rohling eine Tintenstrahldruckschicht aufgebracht und anschließend ggf. mit einem Schutzlack oder einer Schutzfolie die Tintenstrahldruckschicht zum Schutz vor mechanischen und/oder chemischen Beschädigungen oder Manipulationen geschützt wird. Diese Verfahren sind daher im Wesentlichen zur dezentralen Personalisierung geeignet. Zwar können mit diesen Verfahren farbige personalisierte Informationen auf dem Sicherheits- und/oder Wertdokument angebracht werden, es ist aber bei der dezentralen Anbringung in aufwändiger Weise die abschließende Aufbringung des Schutzlackes bzw. der Schutzfolie erforderlich. Zudem gewährleistet die resultierende sehr oberflächennahe Anordnung keine hinreichende Sicherheit gegen Manipulationen der personalisierten Informationen, insbesondere wenn diese zu unerlaubten Zwecken entfernt und anderweitig verwendet oder ausgetauscht werden sollen, wobei dann die Zerstörung lediglich des Schutzlackes oder der Folie hingenommen und diese ggf. ersetzt werden können.

Ein Verfahren der eingangs genannten Art ist aus dem Dokument WO 2005/098746 A bekannt. Personalisierte Teilinformationen auf verschiedenen Schichten sind aus dem Dokument WO 2005/058608 A bekannt.

### Technisches Problem der Erfindung

Der Erfindung liegt das technische Problem zu Grunde, ein Verfahren zur Herstellung eines Polymerschichtverbundes für ein Sicherheits- und/oder Wertdokument anzugeben, bei welchem farbige personalisierte Informationen mit hoher Sicherheit gegen Manipulationen gesichert sind, und welches zentral durchgeführt werden kann.

### Grundzüge der Erfindung und bevorzugte Ausführungsformen

Zur Lösung dieses technischen Problems lehrt die Erfindung ein Verfahren gemäß Anspruch 1.

Mit der Erfindung wird erreicht, dass die erste personalisierte Informationen in Farbe in den Polymerschichtverbund integriert und nicht lediglich aufgedruckt wird. Dadurch ist eine sehr hohe Manipulationssicherheit gewährleistet, da eine Manipulation eine Zerlegung des Polymerschichtverbundes ohne Zerstörung der farbigen Tintenstrahl-Druckschicht erfordert, was praktisch unmöglich ist.

Denn bei dem Zusammenfügungsvorgang wird es sich typischerweise um einem Laminationsverfahrensschritt handeln, wobei die verschiedenen Polymerschichten im Wesentlichen stoffschlüssig miteinander verbunden werden. Es wird daher überflüssig, eine Schutzschicht auf den fertigen Verbund aufzubringen, was die Herstellung erheblich vereinfacht.

Im Einzelnen ist zum Zusammenfügungsvorgang folgenden anzumerken. Grundsätzlich geht dem Zusammenfügungsvorgang der Schritt des Zusammentragens der verschiedenen Polymerschichten voraus. Das Zusammentragen kann in allen fachüblichen Weisen kontinuierlich, quasikontinuierlich oder diskontinuierlich erfolgen. Bei einer sogenannten Rolle zu Rolle Produktion (kontinuierliches Zusammentragen) können alle Polymerschichten parallel zueinander geführt werden, so dass nur beim Einlegen einer Rolle auf eine Passgenauigkeit aller Bahnen geachtet werden muss. Nach dem Einlegen und Anfahren erfolgt eine automatisierte Überwachung der Laufgenauigkeit der Bahnen und automatische Korrektur, so dass die verschiedenen Polymerschichten stets in vorgegebener, definierter Position zueinander laufen. Anschließend erfolgt eine Lamination der zueinander positionierten Bahnen, wobei sich die Rollenlamination als besonders effiziente und schnelle Verfahrensweise anbietet. Alternativ kann mit der Bogenlamination (diskontinuierliches Zusammentragen) gearbeitet werden. Dabei enthält ein Bogen verschiedene Bereiche einer Polymerschicht, welche verschiedenen Sicherheits- und/oder Wertdokumenten zugeordnet sind, oder besteht daraus. Schließlich kann mit dokumentenweiser Einzel-Lamination gearbeitet werden. Dabei können beispielsweise elektronische Schaltungen auf Funktion und Tintenstrahldruckschichten auf Fehlerfreiheit geprüft werden, und zwar bevor die betreffenden Polymerschichten zusammengetragen werden. Dadurch wird Ausschuss minimiert, da nur geprüfte Polymerschichten zueinander getragen und dann miteinander zusammengefügt werden. Es entfällt die Notwendigkeit alle Polymerschichten nachzufertigen, sollte eine der Polymerschichten fehlerhaft sein. Beim quasikontinuierlichen Zusammentragen werden einzelne Lagen des Polymerschichtverbundes an einer Position zusammengeführt. Die Besonderheit liegt darin, dass die Zuführung sowohl von Rolle als auch Einzelbogen eines Stapels erfolgen kann und dass nicht nur streng parallel sondern auch über kreuz gearbeitet werden kann.

In einer weiteren Verfahrensweise erfolgt das Zusammentragen in einer kombinierten Rolle-zu-Rolle- und Bogenverarbeitung. Hier kann ein Elektronikinlay als Bogen und können die Polymerdeckschichten von der Rolle zugeführt werden.

Beim Zusammenfügen werden die verschiedenen Polymerschichten zu einem monolithischen Verbund verbunden. Diese Lamination kann bei Temperaturen zwischen 140 bis 270 °C, vorzugsweise 140 bis 210 °C, und Pressungen (spezifischer Druck direkt am Werkstück) von 1 bis 10 bar, insbesondere 3 bis 7 bar erfolgen.

Nach der Stufe B) (und vor oder nach der Stufe C)) kann eine optische Prüfung stattfinden, um Fehler des Fügens festzustellen. Auch kann dabei die Passgenauigkeit der verschiedenen Polymerschichten geprüft werden.

Nach der B) oder nach der Stufe C) wird typischerweise eine Vereinzelung der Sicherheits- und/oder Wertdokumente durchgeführt, sofern es sich nicht ohnehin um eine Einzelherstellung handelt. Eine solche Vereinzelung kann durch Schneiden oder Stanzung erfolgen.

In einer Weiterbildung der Erfindung enthält eine der Polymerschichten einen elektronischen Schaltkreis (aufliegend oder eingebettet), worunter auch elektronische Schaltungen verstanden werden, wobei eine dritte personalisierte Information vor, insbesondere unmittelbar vor, zugleich oder nach der Stufe C) in den elektronischen Schaltkreis eingespeichert wird. Zweckmäßig ist, wenn diese Polymerschicht auf der Seite des elektronischen Schaltkreises und/oder auf der dem elektronischen Schaltkreis gegenüberliegenden Seite zumindest im Bereich des Chips eine vorzugsweise lichtundurchlässige Bedruckung aufweist. Dadurch kann der elektronische Schaltkreis gegen Lichteinwirkung geschützt werden, oder es eine Konverterschicht gemäß der Literaturstelle EP 4106463 eingebracht werden.

Die Polymerschicht mit lasersensitiver Komponente und die Polymerschicht mit farbiger Tintenstrahl-Druckschicht können gleich oder verschieden sein, i.e. die Tintenstrahl-Druckschicht kann auf der Polymerschicht mit lasersensitiver Komponente oder auf einer anderen Polymerschicht angebracht werden. Die Polymerschicht mit elektronischem Schaltkreis kann, muss aber nicht, verschieden von der Polymerschicht oder den Polymerschichten mit Tintenstrahl-Druckschicht und/oder lasersensitiver Komponente sein.

In der Stufe A kann auf zwei oder mehr verschiedene Polymerschichten eine personalisierte farbige Tintenstrahl-Druckschicht aufgebracht werden. Es ist auch möglich, auf beiden einander gegenüberliegenden Seiten einer Polymerschicht farbige Tintentstrahl-Druckschichten aufzubringen. Dann können, müssen aber nicht, die farbigen Tintenstrahl-Druckschichten auf verschiedenen Polymerschichten jeweils Teilinformationen der ersten personalisierten Information darstellen und optional zueinander komplementär und registergenau angeordnet werden. Mit anderen Worten ausgedrückt, die verschiedenen Tintenstrahl-Druckschichten stellen Teilbilder eines Gesamtbildes dar.

In einer besonders bevorzugten Variante der Erfindung ist die erste personalisierte Information der Farbanteil einer personalisierten Gesamtbildinformation, wobei die zweite personalisierte Information der Schwarzanteil der personalisierten Gesamtbildinformation ist. Hierbei wird die Gesamtbildinformation erst sowohl die Tintenstrahl-Druckschicht als auch die Lasergravur erzeugt, wobei die Tintenstrahldruckschicht ein erstes Teilbild und die Lasergravur ein zweites Teilbild der Gesamtbildinformation darstellen. Es versteht sich, dass dabei die Teilbilder registergenau zueinander erzeugt bzw. angebracht werden müssen.

Optional kann vor der Stufe B), insbesondere unmittelbar vor der Stufe B), eine optische Prüfung der farbigen Tintenstrahl-Druckschicht bzw. der farbigen Tintenstrahl-Druckschichten und/oder eine elektronische Prüfung des elektronischen Schaltkreises durchgeführt werden.

Eine oder mehrere der Polymerschichten können zusätzlich einseitig oder beidseitig mit einer Druckschicht versehen sein, welche mit einer nicht-Tintenstrahldruck-Technologie aufgebracht ist. Hierzu zählen die klassischen Druckverfahren wie Hochdruck (direkt und indirekt), Flachdruck in den Ausprägungen Offsetdruck, Naß- und wasserlos, Durchdruck (Siebdruck), Digital- sowie insbesondere Stichtief- und Rastertiefdruck.

Die Erfindung betrifft des Weiteren einen Polymerschichtverbund erhältlich mit dem erfindungsgemäßen Verfahren. Dabei kann es sich um eine Bahn, einen Bogen oder eine Einzelkarte handeln. Eine Bahn und ein Bogen enthalten eine Mehrzahl von Feldern, wobei jedes Feld nach einer Vereinzelung ein Sicherheits- und/oder Wertdokument bildet. Ein solcher Polymerschichtverbund umfasst eine Mehrzahl von Polymerschichten, wobei zwischen zwei Polymerschichten eine mittels Tintenstrahldruck hergestellte farbige Tintenstrahl-Druckschicht mit einer ersten personalisierten Information angeordnet ist, und wobei in einer der Polymerschichten, enthaltend eine lasersensitiver Komponente, eine mittels Lasergravur herstellte zweite personalisierte Information angeordnet ist. Die Ausführungen zu dem vorstehend beschriebenen Verfahren gelten analog.

Die erste personalisierte Information bzw. die personalisierte Gesamtbildinformation wird typischerweise eine Bilddarstellung, insbesondere ein Passbild einer Person, sein.

Die zweite personalisierte Information kann eine personalisierte Zeichenfolge enthalten oder hieraus bestehen. Dabei kann es sich beispielsweise um den Namen der betreffenden Person, deren Geburtsdatum, und/oder deren Adresse usw. handeln. Die zweite personalisierte Information kann aber auch Dokumenten-individuelle Informationen, wie beispielsweise Seriennummer oder Ausstellungsdatum, umfassen oder hieraus bestehen.

Der Polymerschichtverbund kann 9 bis 15, mit 3 bis 14, insbesondere 5 bis 12 Polymerschichten enthalten bzw. der Polymerschichtverbund kann aus diesen Schichten bestehen. Die Polymerschichten ohne elektronischen Schaltkreis weisen beispielsweise eine Dicke im Bereich von 5 bis 270 µm, vorzugsweise von 10 bis 120 µm, höchstvorzugsweise 20 bis 120 µm auf. Die Polymerschicht mit elektronischem Schaltkreis weist beispielsweise eine Dicke von 50 bis 650 µm auf, beispielsweise im Falle eine Chipmoduls als elektronischem Schaltkreis von 150 bis 650 µm, oder im Falle eines Displaymoduls von 50 bis 600 µm, oder im Falle eines gedünnten Flexchips von 50 bis 200 µm. Grundsätzlich sind als Werkstoffe für die Polymerschichten alle im Bereich der Sicherheits- und/oder Wertdokumente üblichen Werkstoffe einsetzbar. Die Polymerschichten können, gleich oder verschieden, auf Basis eines Polymerwerkstoffes aus der Gruppe bestehend aus "PC (Polycarbonat, insbesondere Bisphenol A Polycarbonat), PET (Polyethylenglykolterephthalat), PMMA (Polymethylmethacrylat), TPU (Thermoplastische Polyurethan Elastomere), PE (Polyethylen), PP (Polypropylen), PI (Polyimid oder Poly-trans-Isopren), PVC (Polyvinylchlorid) und Copolymere solcher Polymere" gebildet sein. Die die Tintenstrahl-Druckschicht tragende Polymerschicht ist allerdings stets eine Polycarbonatschicht. Bevorzugt ist der Einsatz von PC-Werkstoffen, wobei beispielsweise, aber keinesfalls notwendigerweise, auch sogenannte nieder-Tg-Werkstoffe einsetzbar sind, insbesondere für die Polymerschicht auf welcher die Tintenstrahl-Druckschicht abgebracht ist, und/oder für die Polymerschicht, welche mit der Polymerschicht, die die Tintenstrahldruckschicht trägt, verbunden ist, und zwar auf der Seite mit der Tintenstrahldruckschicht. Nieder-T_{g}-Werkstoffe sind Polymere, deren Glastemperatur unterhalb von 140 °C liegt.

Bevorzugt ist es dabei, wenn das Grundpolymer zumindest einer der zu verbindenden Polymerschichten gleiche oder verschiedene miteinander reaktive Gruppen enthält, wobei bei einer Laminiertemperatur von weniger als 200°C reaktive Gruppen einer ersten Polymerschicht miteinander und/oder mit reaktiven Gruppen einer zweiten Polymerschicht reagieren. Dadurch kann die Laminiertemperatur herabgesetzt werden kann, ohne dass dadurch der innige Verbund der laminierten Schichten gefährdet wird. Dies liegt im Falle der verschiedenen Polymerschichten mit reaktiven Gruppen daran, dass die verschiedenen Polymerschichten auf Grund der Reaktion der jeweiligen reaktiven Gruppen nicht mehr ohne weiteres delaminiert werden können. Denn es findet zwischen den Polymerschichten eine reaktive Kopplung statt, gleichsam ein reaktives Laminieren. Zum Zweiten wird ermöglicht, dass wegen der niedrigeren Laminiertemperatur eine Veränderung der farbigen Tintenstrahl-Druckschicht, insbesondere eine Farbveränderung, verhindert wird. Bevorzugt ist es dabei, wenn die Glastemperatur T_{g} der zumindest einen Polymerschicht vor der thermischen Laminierung weniger als 120 °C (oder auch weniger als 110 °C oder als 100 °C) beträgt, wobei die Glastemperatur dieser Polymerschicht nach der thermischen Laminierung durch Reaktion reaktiver Gruppen des Grundpolymers der Polymerschicht miteinander um zumindest 5 °C, vorzugsweise zumindest 20 °C, höher als die Glastemperatur vor der thermischen Laminierung ist. Hierbei erfolgt nicht nur eine reaktive Kopplung der miteinander zu laminierenden Schichten, vielmehr erfolgt eine Erhöhung des Molekulargewichts und somit der Glastemperatur durch Vernetzung des Polymers innerhalb der Schicht und zwischen den Schichten. Dies erschwert ein Delaminieren zusätzlich, insbesondere da bei einem Manipulationsversuch die hohen notwendigen Delaminationstemperaturen z.B. die Farben irreversibel beschädigen und so das Dokument zerstört wird. Vorzugsweise beträgt die Laminiertemperatur in Stufe B) bei Einsatz solcher Polymerwerkstoffe weniger als 180 °C, besser noch weniger als 150 °C. Die Auswahl der geeigneten reaktiven Gruppen ist für den Fachmann für Polymerchemie unschwer möglich. Beispielhafte reaktiven Gruppen sind ausgewählt aus der Gruppe bestehend aus "-CN, -OCN, -NCO, -NC, -SH, -Sₓ, -Tos, -SCN, -NCS, -H, Epoxy (-HOCH₂), -NH₂, -NN⁺, -NN-R, -OH, -COOH, -CHO, -COOR, -Hal (-F, -Cl, -Br, -I), -Me-Hal (Me = zumindest zweiwertiges Metall, beispielsweise Mg), -Si(OR)₃, -SiHal₃, -CH=CH₂, und -COR", wobei R eine beliebige reaktive oder nicht-reaktive Gruppe sein kann, beispielsweise -H, -Hal, C₁-C₂₀-Alkyl, C₃-C₂₀-Aryl, C₄-C₂₀-ArAlkyl, jeweils verzweigt oder linear, gesättigt oder ungesättigt, optional substituiert, oder korrespondierende Heterozyklen mit einem oder mehreren gleichen oder verschiedenen Heteroatomen N, O, oder S". Andere reaktive Gruppen sind selbstverständlich möglich. Hierzu gehören die Reaktionspartner der Diels-Alder Reaktion oder einer Metathese. Die reaktiven Gruppen können direkt an dem Grundpolymer gebunden oder über eine Spacergruppe mit dem Grundpolymer verbunden sein. Als Spacergruppen kommen alle dem Fachmann für Polymerchemie bekannten Spacergruppen in Frage. Dabei können die Spacergruppen auch Oligomere oder Polymere sein, welche Elastizität vermitteln, wodurch eine Bruchgefahr des Sicherheits- und/oder Wertdokuments reduziert wird. Solche elastizitätsvermittelnde Spacergruppen sind dem Fachmann wohl vertraut und brauchen daher hier nicht weiter beschrieben zu werden. Lediglich beispielhaft seien Spacergruppen genannt, welche ausgewählt sind aus der Gruppe bestehend aus "-(CH₂)ₙ-, -(CH₂-CH₂-O)ₙ-, -(SiR₂-O)ₙ-, -(C₆H₄)ₙ-, (C₆H₁₀)ₙ-, C₁-Cₙ-Alkyl, C₃-C₍ₙ₊₃₎-Aryl, C₄-C₍ₙ₊₄₎-ArAlkyl, jeweils verzweigt oder linear, gesättigt oder ungesättigt, optional substituiert, oder korrespondierende Heterozyklen mit einem oder mehreren , gleichen oder verschiedenen Heteroatomen O, N, oder S" mit n=1 bis 20, vorzugsweise 1 bis 10. Bezüglich weiterer reaktiver Gruppen oder Möglichkeiten der Modifikation wird auf die Literaturstelle "Ullmann's Encyclopaedia of Industrial Chemistry", Wiley Verlag, elektronische Ausgabe 2006, verwiesen. Der Begriff des Grundpolymers bezeichnet im Rahmen der vorstehenden Ausführungen eine Polymerstruktur, welche keine unter den eingesetzten Laminierbedingungen reaktive Gruppen trägt. Es kann sich dabei um Homopolymere oder Copolymere handeln. Es sind auch gegenüber den genannten Polymere modifizierte Polymere umfasst.

Erfindungsgemäß eingesetzte Polycarbonatderivate sind hochkompatibel mit Polycarbonatwerkstoffen für, insbesondere mit Polycarbonaten auf Basis Bisphenol A, wie beispielsweise Makrofol^{®} Folien. Zudem ist das eingesetzte Polycarbonatderivat hochtemperaturstabil und zeigt keinerlei Verfärbungen bei laminationstypischen Temperaturen bis zu 200 °C und mehr, wodurch auch der Einsatz der vorstehend beschriebenen Nieder-Tg-Werkstoffe nicht notwendig ist. Erfindungsgemäß enthält das Polycarbonatderivat funktionelle Carbonatstruktureinheiten der Formel (I), 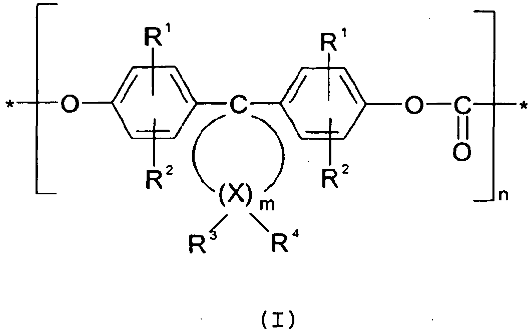 worin R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl; m eine ganze Zahl von 4 bis 7, bevorzugt 4 oder 5; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, dass an mindestens einem Atom X, R³ und R⁴ gleichzeitig Alkyl bedeuten. Bevorzugt ist es, wenn an 1 bis 2 Atomen X, insbesondere nur an einem Atom X, R³ und R⁴ gleichzeitig Alkyl sind. R³ und R⁴ können insbesondere Methyl sein. Die X-Atome in alpha-Stellung zu dem Diphenyl-substituierten C-Atom (C1) können nicht dialkylsubstituiert sein. Die X-Atome in beta-Stellung zu C1 können mit Alkyl disubstituiert sein. Bevorzugt ist m = 4 oder 5. Das Polycarbonatderivat kann beispielsweise auf Basis von Monmeren, wie 4,4'-(3,3,5-trimethylcyclohexan-1,1-diyl)diphenol, 4,4'-(3,3-dimethylcyclohexan-1,1-diyl)diphenol, oder 4,4'-(2,4,4-trimethylcyclopentan-1,1-diyl)diphenol gebildet sein. Ein solches Polycarbonatderivat kann beispielsweise gemäß der Literaturstelle DE 38 32 396.6 aus Diphenolen der Formel (Ia) hergestellt werden. Es können sowohl ein Diphenol der Formel (Ia) unter Bildung von Homopolycarbonaten als auch mehrere Diphenole der Formel (Ia) unter Bildung von Copolycarbonaten verwendet werden (Bedeutung von Resten, Gruppen und Parametern, wie in Formel I).

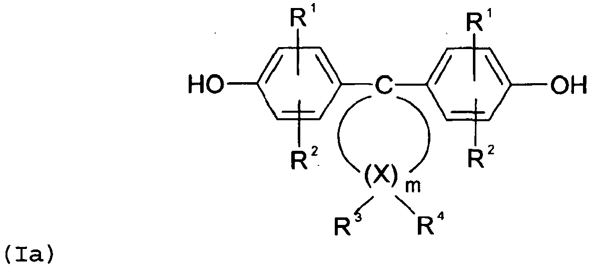

Außerdem können die Diphenole der Formel (Ia) auch im Gemisch mit anderen Diphenolen, beispielsweise mit denen der Formel (Ib)

HO - Z - OH (Ib),

zur Herstellung von hochmolekularen, thermoplastischen, aromatischen Polycarbonatderivaten verwendet werden. Geeignete andere Diphenole der Formel (Ib) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann. Beispiele der Diphenole der Formel (Ib) sind: Hydrochinon, Resorcin, Dihydroxydiphenyle, Bi-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen. Diese und weitere geeignete Diphenole sind z.B. in den Literaturstellen US-A 3 028 365, 2 999 835, 3 148 172, 3 275 601, 2 991 273, 3 271 367, 3 062 781, 2 970 131 und 2 999 846, in den Literaturstellen DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan. Besonders bevorzugte Diphenole der Formel (Ib) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden. Das molare Verhältnis von Diphenolen der Formel (Ia) zu den gegebenenfalls mitzuverwendenden anderen Diphenolen der Formel (Ib), soll zwischen 100 Mol-% (Ia) zu 0 Mol-% (Ib) und 2 Mol-% (Ia) zu 98 Mol-% (Ib), vorzugsweise zwischen 100 Mol-% (Ia) zu 0 Mol-% (Ib) und 10 Mol-% (Ia) zu 90 Mol-% (Ib) und insbesondere zwischen 100 Mol-% (Ia) zu 0 Mol-% (Ib) und 30 Mol-% (Ia) zu 70 Mol-% (Ib) liegen. Die hochmolekularen Polycarbonatderivate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein. Die eingesetzten Polycarbonatderivate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind: Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol. Als Kettenabbrecher zur an sich bekannten Regelung des Molekulargewichts der Polycarbonatderivate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (Ic) geeignet 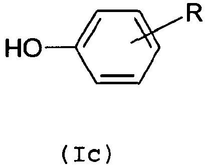 worin R einen verzweigten C₈- und/oder C₉-Alkylrest darstellt. Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt. Die Polycarbonatderivate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden. Hierbei werden die Diphenole der Formel (Ia) in wässrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ib), eingesetzt. Zur Regulierung des Molekulargewichts können Kettenabbrecher z.B. der Formel (Ic) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C. Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ib) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ib); bei Mitverwendung von Chlorkohlensäureestern kann die Phosgenmenge in bekannter Weise entsprechend reduziert werden. Geeignete organische Lösungsmittel für die Kettenabbrecher sowie gegebenenfalls für die Verzweiger und die Chlorkohlensäureester sind beispielsweise Methylenchlorid, Chlorbenzol sowie insbesondere Mischungen aus Methylenchlorid und Chlorbenzol. Gegebenenfalls können die verwendeten Kettenabbrecher und Verzweiger im gleichen Solvens gelöst werden. Als organische Phase für die Phasengrenzflächenpolykondensation dient beispielsweise Methylenchlorid, Chlorbenzol sowie Mischungen aus Methylenchlorid und Chlorbenzol. Als wässrige alkalische Phase dient beispielsweise NaOH-Lösung. Die Herstellung der Polycarbonatderivate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden. Die Polycarbonatderivate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden. Die Polycarbonatderivate können linear oder verzweigt sein, sie sind Homopolycarbonate oder Copolycarbonate auf Basis der Diphenole der Formel (Ia). Durch die beliebige Komposition mit anderen Diphenolen, insbesondere mit denen der Formel (Ib) lassen sich die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonatderivaten enthalten. Das Polycarbonatderivat kann ein Copolymer sein enthaltend, insbesondere hieraus bestehend, Monomereinheiten M1 auf Basis der Formel (Ib),vorzugsweise Bisphenol A, sowie Monomereinheiten M2 auf Basis des geminal disubstituierten Dihydroxydiphenylcycloalkans, vorzugsweise des 4,4'-(3,3,5-trimethylcyclohexan-1,1-diyl)diphenols, ist, wobei das Molverhältnis M2/M1 vorzugsweise größer als 0,3, insbesondere größer als 0,4, beispielsweise größer als 0,5 ist. Bevorzugt ist es, wenn das Polycarbonatderivat ein mittleres Molekulargewicht (Gewichtsmittel) von mindestens 10.000, vorzugsweise von 20.000 bis 300.000, aufweist. Die Komponente B kann grundsätzlich im Wesentlichen organisch oder wäßrig sein. Im Wesentlichen wäßrig meint dabei, dass bis zu 20 Gew.-% der Komponente B) organische Lösungsmittel sein können. Im Wesentlichen organisch meint, dass bis zu 5 Gew.-% Wasser in der Komponente B) vorliegen können. Vorzugsweise enthält die Komponente B einen bzw. besteht aus einem flüssigen aliphatischen, cycloaliphatischen, und/oder aromatischen Kohlenwasserstoff, einem flüssigem organischen Ester, und/oder einer Mischung solcher Substanzen. Die eingesetzten organischen Lösungsmittel sind vorzugsweise halogenfreie organische Lösungsmittel. In Frage kommen insbesondere aliphatische, cycloaliphatische, aromatische Kohlenwasserstoffe, wie Mesitylen, 1,2,4- Trimethylbenzol, Cumol und Solvent Naptha, Toluol, Xylol; (organische) Ester, wie Methylacetat, Ethylacetat, Butylacetat, Methoxypropylacetat, Ethyl-3-ethoxypropionat. Bevorzugt sind Mesitylen, 1,2,4-Trimethylbenzol, Cumol und Solvent Naptha, Toluol, Xylol, Essigsäuremethylester, Essigsäureethylester, Methoxypropylacetat. Ethyl-3-ethoxypropionat. Ganz besonders bevorzugt sind: Mesitylen (1,3,5-Trimethylbenzol), 1,2,4-Trimethylbenzol, Cumol (2-Phenylpropan), Solvent Naptha und Ethyl-3-ethoxypropionat. Ein geeignetes Lösungsmittelgemisch umfasst beispielsweise L1) 0 bis 10 Gew.-%, vorzugsweise 1 bis 5 Gew.-%, insbesondere 2 bis 3 Gew.-%, Mesitylen, L2) 10 bis 50 Gew.-%, vorzugsweise 25 bis 50 Gew.-%, insbesondere 30 bis 40 Gew.-%, 1-Methoxy-2-propanolacetat, L3) 0 bis 20 Gew.-%, vorzugsweise 1 bis 20 Gew.-%, insbesondere 7 bis 15 Gew.-%, 1,2,4-Trimethylbenzol, L4) 10 bis 50 Gew.-%, vorzugsweise 25 bis 50 Gew.-%, insbesondere 30 bis 40 Gew.-%, Ethyl-3-ethoxypropionat, L5) 0 bis 10 Gew.-%, vorzugsweise 0,01 bis 2 Gew.-%, insbesondere 0,05 bis 0,5 Gew.-%, Cumol, und L6) 0 bis 80 Gew.-%, vorzugsweise 1 bis 40 Gew.-%, insbesondere 15 bis 25 Gew.-%, Solvent Naphtha, wobei die Summe der Komponenten L1 bis L6 stets 100 Gew.-% ergibt. Das Polycarbonatderivat weist typischerweise ein mittleres Molekulargewicht (Gewichtsmittel) von mindestens 10.000, vorzugsweise von 20.000 bis 300.000. Die Zubereitung kann im Detail enthalten: A) 0,1 bis 10 Gew.-%, insbesondere 0,5 bis 5 Gew.-%, eines Bindemittels mit einem Polycarbonatderivat auf Basis eines geminal disubstituierten Dihydroxydiphenylcycloalkans, B) 40 bis 99,9 Gew.-%, insbesondere 45 bis 99,5 Gew.-%, eines organischen Lösungsmittels oder Lösungsmittelgemischs, C) 0,1 bis 6 Gew.-%, insbesondere 0,5 bis 4 Gew.-%, eines Farbmittels oder Farbmittelgemischs, D) 0,001 bis 6 Gew.-%, insbesondere 0,1 bis 4 Gew.-%, eines funktionales Materials oder einer Mischung funktionaler Materialien, E) 0,1 bis 30 Gew.-%, insbesondere 1 bis 20 Gew.-%, Additive und/oder Hilfsstoffe, oder einer Mischung solcher Stoffe. Als Komponente C, sofern ein Farbmittel vorgesehen sein soll, kommt grundsätzlich jedes beliebige Farbmittel oder Farbmittelgemisch in Frage. Unter Farbmittel sind alle farbgebenden Stoffe bezeichnet. Das bedeutet, es kann sich sowohl um Farbstoffe (einen Überblick über Farbstoffe gibt Ullmann's Encyclopedia of Industrial Chemistry, Electronic Release 2007, Wiley Verlag, Kapitel "Dyes, General Survey", wie auch Pigmente (einen Überblick über organische wie anorganische Pigmente gibt Ullmann's Encyclopedia of Industrial Chemistry, Electronic Release 2007, Wiley Verlag, Kapitel "Pigments, Organic" bzw. "Pigments, Inorganic") handeln. Farbstoffe sollten in den Lösungsmitteln der Komponente B löslich bzw. (stabil) dispergierbar oder suspendierbar sein. Des Weiteren ist es vorteilhaft, wenn das Farbmittel bei Temperaturen von 160 °C und mehr für einen Zeitraum von mehr als 5 min. stabil, insbesondere farbstabil ist. Es ist auch möglich, dass das Farbmittel einer vorgegebenen und reproduzierbaren Farbveränderung unter den Verarbeitungsbedingungen unterworfen ist und entsprechend ausgewählt wird. Pigmente müssen neben der Temperaturstabilität insbesondere in feinster Partikelgrößenverteilung vorliegen. In der Praxis des Tintenstrahldrucks bedeutet dies, dass die Teilchengröße nicht über 1,0 µm hinausgehen sollte, da sonst Verstopfungen im Druckkopf die Folge sind. In der Regel haben sich nanoskalige Festkörperpigmente und gelöste Farbstoffe bewährt. Die Farbmittel können kationisch, anionisch oder auch neutral sein. Lediglich als Beispiele für im Tintenstrahldruck verwendbare Farbmittel seinen genannt: Brillantschwarz C.I. Nr. 28440, Chromogenschwarz C.I. Nr. 14645, Direkttiefschwarz E C.I. Nr. 30235, Echtschwarzsalz B C.I. Nr. 37245, Echtschwarzsalz K C.I. Nr. 37190, Sudanschwarz HB C.I. 26150, Naphtolschwarz C.I. Nr. 20470, Bayscript^{®} Schwarz flüssig, C.I. Basic Black 11, C.I. Basic Blue 154, Cartasol^{®} Türkis K-ZL flüssig, Cartasol^{®} Türkis K-RL flüssig (C.I. Basic Blue 140), Cartasol Blau K5R flüssig. Geeignet sind des Weiteren z. B. die im Handel erhältlichen Farbstoffe Hostafine^{®} Schwarz TS flüssig (vertrieben von Clariant GmbH Deutschland), Bayscript^{®} Schwarz flüssig (C.I.-Gemisch, vertrieben von Bayer AG Deutschland), Cartasol^{®} Schwarz MG flüssig (C.I. Basic Black 11, Eingetragenes Markenzeichen der Clariant GmbH Deutschland), Flexonylschwarz^{®} PR 100 (E C.I. Nr. 30235, vertrieben von Hoechst AG), Rhodamin B, Cartasol^{®} Orange K3 GL, Cartasol^{®} Gelb K4 GL, Cartasol^{®} K GL, oder Cartasol^{®} Rot K-3B. Des weiteren können als lösliche Farbmittel Anthrachinon-, Azo-, Chinophthalon-, Cumarin-, Methin-, Perinon-, und/oder Pyrazolfarbstoffe, z.B. unter dem Markennamen Macrolex^{®} erhältlich, Verwendung finden. Weitere geeignete Farbmittel sind in der Literaturstelle Ullmann's Encyclopedia of Industrial Chemistry, Electronic Release 2007, Wiley Verlag, Kapitel "Colorants Used in Ink Jet Inks" beschrieben. Gut lösliche Farbmittel führen zu einer optimalen Integration in die Matrix bzw. den Binder der Druckschicht. Die Farbmittel können entweder direkt als Farbstoff bzw. Pigment zugesetzt werden oder als Paste, einem Gemisch aus Farbstoff und Pigment zusammen mit einem weiteren Binder. Dieser zusätzliche Binder sollte chemisch kompatibel mit den weiteren Komponenten der Zubereitung sein. Sofern eine solche Paste als Farbmittel eingesetzt wird, bezieht sich die Mengenangabe der Komponente B auf das Farbmittel ohne die sonstigen Komponenten der Paste. Diese sonstigen Komponenten der Paste sind dann unter die Komponente E zu subsumieren. Bei Verwendung von sogenannten Buntpigmenten in den Skalenfarben Cyan-Magenta-Yellow und bevorzugt auch (Ruß)-Schwarz sind Volltonfarbabbildungen möglich. Die Komponente D umfasst Substanzen, die unter Einsatz von technischen Hilfsmitteln unmittelbar durch das menschliche Auge oder durch Verwendung von geeigneten Detektoren ersichtlich sind. Hier sind die dem Fachmann einschlägig bekannten Materialien (vgl. auch van Renesse, Optical document security, 3rd Ed., Artech House, 2005) gemeint, die zu Absicherung von Wert und Sicherheitsdokumenten eingesetzt werden. Dazu zählen Lumineszenzstoffe (Farbstoffe oder Pigmente, organisch oder anorganisch) wie z.B. Photoluminophore, Elektroluminophore, Antistokes Luminophore, Fluorophore aber auch magnetisierbare, photoakustisch adressierbare oder piezoelektrische Materialien. Des Weiteren können Raman-aktive oder Ramanverstärkende Materialien eingesetzt werden, ebenso wie sogenannte Barcode-Materialien. Auch hier gelten als bevorzugte Kriterien entweder die Löslichkeit in der Komponente B oder bei pigmentierten Systemen Teilchengrößen < 1 µm sowie Temperaturstabilität für Temperaturen > 160 °C im Sinne der Ausführungen zur Komponente C. Funktionale Materialien können direkt zugegeben werden oder über eine Paste, i.e. Gemisch mit einem weiteren Binder, welcher dann Bestandteil der Komponente E bildet, oder dem eingesetzten Binder der Komponente A. Die Komponente E umfasst bei Tinten für den Tintenstrahldruck üblicherweise eingerichtete Stoffe wie Antischaummittel, Stellmittel, Netzmittel, Tenside, Fließmittel, Trockner, Katalysatoren, (Licht-) Stabilisatoren, Konservierungsmittel, Biozide, Tenside; organische Polymere zur Viskositätseinstellung, Puffersysteme, etc. Als Stellmittel kommen fachübliche Stellsalze in Frage. Ein Beispiel hierfür ist Natriumlactat. Als Biozide kommen alle handelsüblichen Konservierungsmittel, welche für Tinten verwendet werden, in Frage. Beispiele hierfür sind Proxel^{®}GXL und Parmetol^{®} A26. Als Tenside kommen alle handelsüblichen Tenside, welche für Tinten verwendet werden, in Frage. Bevorzugt sind amphotere oder nichtionische Tenside. Selbstverständlich ist aber auch der Einsatz spezieller anionischer oder kationischer Tenside, welche die Eigenschaften des Farbstoffs nicht verändern, möglich. Beispiele für geeignete Tenside sind Betaine, ethoxilierte Diole usw.. Beispiele sind die Produktreihen Surfynol^{®} und Tergitol^{®}. Die Menge an Tensiden wird beispielsweise mit der Maßgabe gewählt, dass die Oberflächenspannung der Tinte im Bereich von 10 bis 60 mN/m, vorzugsweise 20 bis 45 mN/m, gemessen bei 25 °C, liegt. Es kann ein Puffersystem eingerichtet sein, welches den pH-Wert im Bereich von 2,5 bis 8,5, insbesondere im Bereich von 5 bis 8, stabilisiert. Geeignete Puffersysteme sind Lithiumacetat, Boratpuffer, Triethanolamin oder Essigsäure/Natriumacetat. Ein Puffersystem wird insbesondere im Falle einer im Wesentlichen wässrigen Komponente B in Frage kommen. Zur Einstellung der Viskosität der Tinte können (ggf. wasserlösliche) Polymere vorgesehen sein. Hier kommen alle für übliche Tintenformulierungen geeignete Polymere in Frage. Beispiele sind wasserlösliche Stärke, insbesondere mit einem mittleren Molekulargewicht von 3.000 bis 7.000, Polyvinylpyrolidon, insbesondere mit einem mittleren Molekulargewicht von 25.000 bis 250.000, Polyvinylalkohol, insbesondere mit einem mittleren Molekulargewicht von 10.000 bis 20.000, Xanthan-Gummi, Carboxy-Methylcellulose, Ethylenoxid/Propylenoxid-Blockcopolymer, insbesondere mit einem mittleren Molekulargewicht von 1.000 bis 8.000. Ein Beispiel für das letztgenannte Blockcopolymer ist die Produktreihe Pluronic^{®}. Der Anteil an Biozid, bezogen auf die Gesamtmenge an Tinte, kann im Bereich von 0 bis 0,5 Gew-%, vorzugsweise 0,1 bis 0,3 Gew.-%, liegen. Der Anteil an Tensid, bezogen auf die Gesamtmenge an Tinte, kann im Bereich von 0 bis 0,2 Gew.-% liegen. Der Anteil an Stellmitteln kann, bezogen auf die Gesamtmenge an Tinte, 0 bis 1 Gew.-%, vorzugsweise 0,1 bis 0,5 Gew.-%, betragen. Zu den Hilfsmitteln werden auch sonstige Komponenten gezählt, wie beispielsweise Essigsäure, Ameisensäure oder n-Methyl-Pyrolidon oder sonstige Polymere aus der eingesetzten Farbstofflösung oder -Paste. Bezüglich Substanzen, welche als Komponente E geeignet sind, wird ergänzend beispielsweise auf Ullmann's Encyclopedia of Chemical Industry, Electronic Release 2007, Wiley Verlag, Kapitel "Paints and Coatings", Sektion "Paint Additives", verwiesen.

Bei der lasersensitiven Komponente kann es sich grundsätzlich um ein Polymer handeln, welches per se sich durch Lasereinstrahlung lokal pyrolysieren und so schwarz färben läßt. Die betreffende Polymerschicht kann auch aus einem solchen Polymer bestehen. Geeignete Polymere sind folgend im Zusammenhang mit lasersensitiven Pigmenten erläutert. Es kann sich bei der lasersensitiven Komponente aber auch um ein lasersensitives Pigment handeln, welches dem Polymerwerkstoff der betreffenden Polymerschicht beigemischt und hierin verteilt ist. Als lasersensitive Pigmente sind alle im technologischen Bereich der Sicherheits- und/oder Wertprodukte bekannte Pigmente einsetzbar. Sie können beispielsweise aus organischen Polymeren gebildet sein, welche eine hohe Absorption der Laserstrahlung aufweisen, beispielsweise PET, ABS, Polystyrol, PPO, Polyphenylensulfid, Polyphenylensulfon, Polyimidsulfon. Es kann sich aber auch beispielsweise um LCPs handeln. Besonders geeignet sind mikrovermahlene Thermoplaste mit einem sehr hohen Schmelzbereich von mehr als 300 °C. Die Teilchengröße ist typischerweise im Bereich von 0,01 bis 100 µm, insbesondere 0,1 bis 50 µm, vorzugsweise 1 bis 20 µm. Die Polymerpartikel können des weiteren lichtsensitive Füllstoffe oder Pigmente enthalten, beispielsweise in einer Menge von 0,1 bis 90 Gew.-%, bezogen auf das lasersensitive Pigment. Dabei kann es sich auch um elektrisch leitfähige Pigmente und/oder Effektpigmente und/oder Farbstoffe, wie vorstehend beschrieben handeln. Es kann sich aber auch um Oxide, Hydroxide, Sulfide, Sulfate oder Phosphate von Metallen, wie beispielsweise Cu, Bi, Sn, Zn, Ag, Sb, Mn, Fe, Ni, oder Cr handeln. Insbesondere basisches Cu(II)hydroxidphosphat ist einsetzbar. Speziell zu nennen ist ein Produkt der Erhitzung von blauem Cu(II)orthophosphat (Cu₃(PO₄)₂*3H₂O) auf 100 bis 200 °C entsteht und eine Summenformel Cu₃(PO₄)₂*Cu(OH)₂ aufweist. Weitere geeignete Kupferphosphate sind: Cu₃(PO₄)₂*3Cu(OH)₂, Cu₃(PO₄)₂*2Cu(OH)₂*2H₂O, 4CuO*P₂O₅, 4CuO*P₂O₅*3H₂O, 4CuO*P₂O₅*1,5H₂O und 4CuO*P₂O₅*1,2H₂O.

Geeignete Laserstrahlung zur Erzeugung der zweiten personalisierten Information weist eine Wellenlänge im Bereich 150 nm bis 10600 nm, insbesondere 150 nm bis 1100 nm, auf. Einsetzbar sind beispielsweise CO₂-Laser (10600 nm), Nd:YAG-Laser (1064 nm bzw. 532 nm), und gepulste UV-Laser (Excimer-Laser. Die Energiedichte liegt im allgemeinen im Bereich von 0,3 mJ/cm² bis 50 J/cm², insbesondere im Bereich 0,3 mJ/cm² bis 10 J/cm².

Auf einer der Polymerschichten oder auf mehreren der Polymerschichten können weitere Druckschichten eingerichtet sein, welche aus dem Bereich der Sicherheits- und/oder Wertdokumente bekannt sind. Diese können auf einer Seite oder auf beiden Seiten der Polymerschicht (en) vor dem Zusammenfügen angebracht sein. Dabei kann eine solche weitere Druckschicht auch auf die Polymerschicht mit farbiger Tintenstrahl-Druckschicht aufgebracht sein, und zwar auch unmittelbar über oder unter der Tintenstrahl-Druckschicht und/oder auf der der Tintenstrahl-Druckschicht gegenüberliegenden Seite der Polymerschicht. Solche Druckschichten können auch funktionale Stoffe, wie vorstehend zur Komponente D) erläutert, enthalten.

Während der Stufe B) ist es auch möglich, beispielsweise (beliebige) Beugungstrukturen einzubringen bzw. aufzubringen, wie beispielsweise aus den Dokumenten DE 199 49 945 oder 100 36 505 bekannte Linsenraster.

Die Erfindung betrifft des Weiteren ein Sicherheits- und/oder Wertdokument enthaltend einen erfindungsgemäßen Polymerschichtverbund sowie optional eine Schicht oder mehrere Schichten auf Basis Papier, Teslin und anderen Verbundmaterialien.

Als Sicherheits- und/oder Wertdokumente seien beispielhaft genannt: Personalausweise, Reisepässe, ID-Karten, Zugangskontrollausweise, Visa, Tickets, Führerscheine, Kraftfahrzeugpapiere, personalisierte Wertpapiere Kreditkarten, und personalisierte Chipkarten. Solche Sicherheits- und/oder Wertdokumente weisen typischerweise zumindest ein Substrat, eine Druckschicht und optional eine transparente Deckschicht auf. Substrat und Deckschicht können ihrerseits aus einer Mehrzahl von Schichten bestehen. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder (organischer) Polymerbasis in Frage. Ein solches Sicherheits- und/oder Wertdokument umfasst innerhalb des Gesamt-Schichtverbundes einen erfindungsgemäßen Polymerschichtverbund. Neben dem erfindungsgemäßen Polymerschichtverbund kann noch zumindest eine (zusätzliche) Druckschicht eingerichtet sein, welche auf einer äußeren Fläche des Polymerschichtverbundes oder auf einer mit dem Polymerschichtverbund verbundenen weiteren Schicht angebracht sein kann.

Die Erfindung betrifft schließlich ein Verfahren zur Herstellung eines erfindungsgemäßen Sicherheits- und/oder Wertdokuments, wobei der Polymerschichtverbund zugleich oder nach der Zusammenfügung der Polymerschichten mit einer Schicht oder mehreren weiteren Schichten auf Basis Papier, Teslin und anderen Verbundmaterialien zusammengefügt wird, beispielsweise durch Laminieren oder Kleben.

Im Folgenden wird die Erfindung anhand lediglich Ausführungsformen darstellenden Beispielen näher erläutert. Es zeigen:
- Fig. 1:: Prozessablauf der ersten Variante des Zusammentragens und Zusammenfügens verschiedener Polymerschichten,
- Fig. 2:: Prozessablauf der zweiten Variante des Zusammentragens und Zusammenfügens verschiedener Polymerschichten,
- Fig. 3:: Aufbau einer ersten PC ID1 Karte, und
- Fig. 4:: Aufbau einer zweiten PC ID1 Karte.

### Beispiel 1: Herstellungsprozess

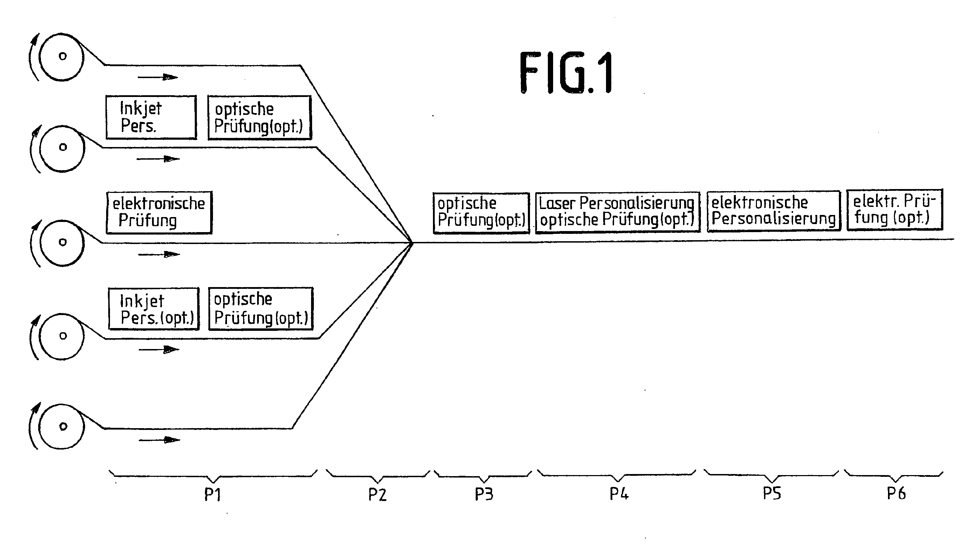

In der Figur 1 erkennt man den Prozess des Zusammentragens und Zusammenfügens zu einem erfindungsgemäßen Polymerschichtverbund. Man erkennt fünf verschiedene Bahnen 1, 2, 3, 4, 5, welche jeweils aus einer Polymerschicht bzw. -Folie gebildet sind. Weitere Bahnen können außerhalb und/oder zwischen den gezeigten Bahnen parallel laufend eingerichtet sein und sind der Übersichtlichkeit halber nicht dargestellt. Bei den Bahnen 1, 2, 3, 4, 5 kann es sich insbesondere um Polycarbonatfolien handeln, wobei die Bahnen 1, 2, 4, 5, gleich oder verschieden, eine Dicke von 5 bis 270 µm aufweisen können. Auf zumindest einer der Bahnen 2, 4, optional auf beiden, ist eine farbige Tintenstrahl-Druckschicht aufgebracht worden, welche eine erste personalisierte Information darstellt. Zumindest eine der Schichten 1, 2, 3, 4, 5 kann ansonsten eine Laser-sensitive Komponente enthalten. Nach dem Aufdrucken und vor dem Zusammentragen erfolgt optional eine Trocknung der Tintenstrahl-Druckschicht(en). Auf zumindest einer der Polymerschichten 1, 2, 3, 4, 5 kann zudem eine Druckschicht anderer Drucktechnologien angebracht sein, beispielsweise ein Irisdruck im Hochdruck- oder Offsetdruckverfahren. Die Polymerschicht 3 enthält einen elektronischen Schaltkreis (oder mehrere elektronische Schaltkreise, welche jeweils einem fertigen Sicherheits- und/oder Wertdokument zugeordnet sind). Der elektronische Schaltkreis kann auch in einer der anderen dargestellten Schichten 1, 2, 4, 5 vorgesehen sein.

In der Phase P1 laufen die verschiedenen Polymerschichten 1, 2, 3, 4, 5 zueinander parallel, auf der Schicht 2 erfolgt die Aufbringung einer Tintenstrahl-Druckschicht, optional gefolgt von einer optischen Prüfung der Tintenstrahl-Druckschicht. Desweiteren erfolgt optional eine Prüfung der elektronischen Schaltung in der Schicht 3. Ggf. kann auf der Schicht 4 eine zweite Tintenstrahl-Druckschicht, welche gleich oder verschieden von der ersten Tintenstrahl-Druckschicht ist, aufgebracht werden und optional erfolgt in dieser Phase P1 eine optische Prüfung der zweiten Tintenstrahl-Druckschicht. Dabei können die besagten Tintenstrahl-Druckschichten jeweils unabhängig voneinander auf der einen oder der anderen Seite der Schichten 2, 4 aufgebracht werden. In der Phase P2 werden die verschiedenen Polymerschichten 1, 2, 3, 4, 5 zusammengetragen und im Wege der Lamination zusammengefügt. Eine Fixierung der zusammengetragenen Schichten untereinander vor dem Laminieren kann beispielsweise mittels Ultraschallheften aber auch mit anderen Heftverfahren, wie Klebheftung, erfolgen. Die Lamination kann mit allen fachüblichen Laminationsverfahren, beispielsweise mittels Pressblechen in einer kombinierten Heiz-/ Kühlpresse oder besonders vorteilhaft mittels einer Rollenlamination erfolgen. In der Phase P3 erfolgt optional eine optische Prüfung auf einwandfreie Fügung. In der Phase P4 erfolgt eine Lasergravur mit der zweiten personalisierten Information sowie optional eine anschließende optische Prüfung der Lasergravur. Hierzu enthält eine der Polymerschichten 1, 2, 3, 4, 5 eine lasersensitive Komponente, beispielsweise ein lasersensitives Pigment. In der Phase P5 erfolgt eine elektronische Personalisierung durch Einspeicherung personalisierter Daten in die elektronische Schaltung. In der Phase P6 erfolgt optional eine elektronische Prüfung der eingespeicherten Daten.

### Beispiel 2: Alternativer Herstellungsprozess

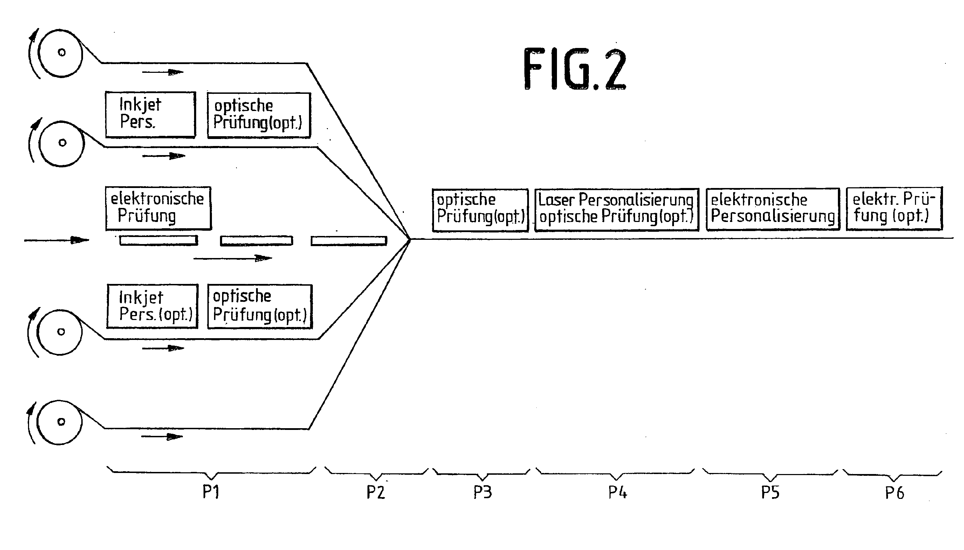

In der Figur 2 erkennt man einen alternativen Prozess des Zusammentragens und Zusammenfügens zu einem erfindungsgemäßen Polymerschichtverbund. Man erkennt 4 verschiedene Bahnen 1, 2, 4, 5, und eine Bogenzuführung 3 welche jeweils aus einer Polymerschicht bzw. -Folie gebildet sind. Weitere Bahnen können außerhalb und/oder zwischen den gezeigten Bahnen parallel laufend eingerichtet sein und sind der Übersichtlichkeit halber nicht dargestellt. Bei den Bahnen, bzw Bogen 1, 2, 3, 4, 5 kann es sich insbesondere um Polycarbonatfolien handeln, wobei die Bahnen 1, 2, 4, 5, gleich oder verschieden, eine Dicke von 5 bis 270 µm aufweisen können. Auf zumindest einer der Bahnen 2, 4, optional auf beiden, ist eine farbige Tintenstrahl-Druckschicht aufgebracht worden, welche eine erste personalisierte Information darstellt. Nach dem Aufdrucken und vor dem Zusammentragen erfolgt optional eine Trocknung der Tintenstrahl-Druckschicht(en). Auf zumindest einer der Polymerschichten 1, 2, 3, 4, 5 kann zudem eine Druckschicht anderer Drucktechnologien angebracht sein, beispielsweise ein Iris-Flachdruck, Guillochen. Die Polymerschicht 3 ist als Bogen ausgeführt und enthält einen elektronischen Schaltkreis in einem Bogen (oder mehrere elektronische Schaltkreise je Bogen, welche jeweils einem fertigen Sicherheits- und/oder Wertdokument zugeordnet sind). Die Bogenzuführung der Schicht 3 kann auch mit einer der anderen Schichten 1, 2, 4, 5 vertauscht sein.

In der Phase P1 laufen die verschiedenen Polymerschichten 1, 2, 3, 4, 5 zueinander parallel, auf der Schicht 2 erfolgt die Aufbringung einer Tintenstrahl-Druckschicht und optional erfolgt in dieser Phase P1 eine optische Prüfung der Tintenstrahl-Druckschicht. Desweiteren erfolgt optional eine Prüfung des elektronischen Schlatkreises in den Bögen 3. Ggf. kann auf der Schicht 4 eine zweite Tintenstrahl-Druckschicht, welche gleich oder verschieden von der ersten Tintenstrahl-Druckschicht ist, aufgebracht werden und optional erfolgt in dieser Phase P1 auch eine optische Prüfung der zweiten Tintenstrahl-Druckschicht. Dabei können die besagten Tintenstrahl-Druckschichten jeweils unabhängig voneinander auf der einen oder der anderen Seite der Schichten 2, 4 aufgebracht werden. Ebenso, wie in Beispiel 1 kann die zweite Tintenstrahldruckschicht eine dritte personalisierte Information darstellen, welche verschieden von der ersten personalisierten Information ist. In der Phase P2 werden die verschiedenen Polymerschichten 1, 2, 3, 4, 5 zusammengetragen und im Wege der Lamination zusammengefügt. Hier ist es besonders vorteilhaft, dass Polymerschicht 3 mit integrierten optionalen elektronischen Schaltkreisen als Bogen 3 verwendet wird. Dies ermöglicht ein vereinfachtes Ausrichten der Bahnen zum Bogen. Eine Fixierung der zusammengetragenen Schichten untereinander kann bespielsweise mittels Ultraschallheften, aber auch mit anderen Heftverfahren, wie Klebheftung, erfolgen. Die Lamination kann mit allen fachüblichen Laminationsverfahren, beispielsweise mittels Pressblechen in einer kombinierten Heiz-/ Kühlpresse oder besonders vorteilhaft in einer Rollenlamination erfolgen. In der Phase P3 erfolgt optional eine optische Prüfung auf einwandfreie Fügung. In der Phase P4 erfolgt eine Lasergravur mit der zweiten personalisierten Information. Hierzu enthält eine der Polymerschichten 1, 2, 3, 4, 5 eine lasersensitive Komponente, beispielsweise ein lasersensitives Pigment. In der Phase P5 erfolgt eine elektronische Personalisierung durch Einspeicherung personalisierter Daten in die elektronische Schaltung. In der Phase P6 erfolgt optional eine elektronische Prüfung der eingespeicherten Daten.

### Beispiel 3: Erste PC ID1 Karte

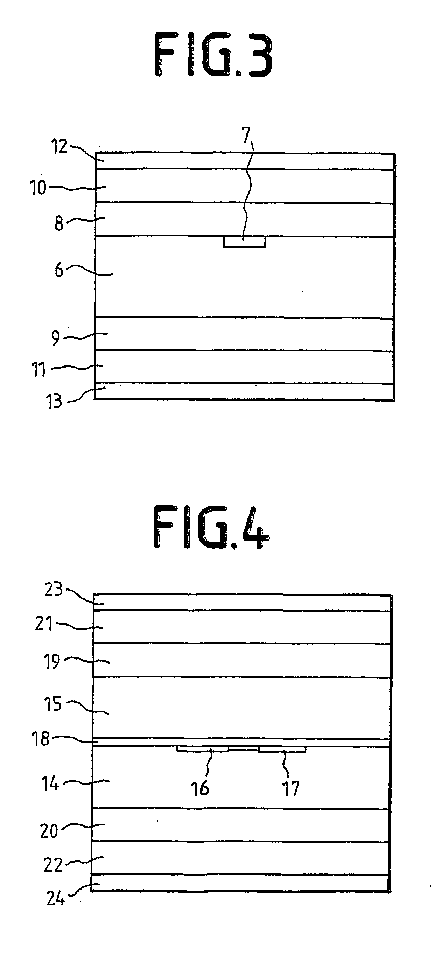

Die Figur 3 zeigt den Schichtaufbau einer Polycarbonat Identitätskarte (beispielsweise Personalausweis). Man erkennt in der Mitte eine Polymerschicht 6 mit einem elektronischen Chip 7 und einer Dicke von 300 µm. Beidseitig der Polymerschicht 6 sind 100 µm dicke, opake Polymerschichten 8, 9 eingerichtet, welche mit einer Druckschicht versehen sind, welche mittels einer vom Tintenstrahldruck verschiedenen Drucktechnologie hergestellt worden ist, beispielsweise einem Irisdruck im Hochdruck- oder Offsetdruckverfahren. Zu den Polymerschichten 8, 9 unmittelbar angrenzend und außenliegend befinden sich jeweils eine 100 µm dicke, transparente Polymerschicht 10, 11, wobei zumindest eine der Polymerschichten 10, 11 eine Tintenstrahldruckschicht trägt. Zu den Polymerschichten 10, 11 außenliegend sind schließlich je eine Polymerschicht 12, 13 eingerichtet, welche als 50 µm dicke, transparente Overlay-Schichten ausgebildet sind.

### Beispiel 4: Zweite PC ID1 Karte

In der Mitte erkennt man zwei opake Polymerschichten 14, 15 der Dicke 150 µm wobei auf der einen Polymerschicht 14 und auf der der Polymerschicht zugewandten Seite ein Chip 16 mit einer Antenne 17 aufgebracht ist. Der Chip 16 und die Antenne 17 sind mit einer ersten Druckschicht 18 überdruckt. Nach außen schließen sich opake und 100 µm dicke Polymerschichten 19, 20 an, welche auf der jeweils außenliegenden Seite als Hintergrund eine Druckschicht einer Nicht-Tintenstrahldruck-Technologie, beispielsweise eine Iris im Flachdruck tragen. Weiterhin nach außen schließen sich die 100 µm dicken und transparenten Polymerschichten 21, 22 an, welche innenliegend eine als Hochdruckschicht ausgebildete Beschriftung tragen. Die Polymerschicht 21 weist außenliegend eine Fluoreszenzdruckschicht auf und die Polymerschicht 22 weist außenliegend sowohl eine Druckschicht mit optisch variablen Pigmenten als auch eine Tintenstrahldruckschicht mit personalisierten Informationen, beispielsweise ein Passbild, auf. Die zu äußerst liegenden Polymerschichten 23 und 24 sind 50 µm dick und transparent. Dabei enthält die Polymerschicht 23 eine lasersensitive Komponente, beispielsweise lasersensitive Pigmente. In die Polymerschicht 23 ist dabei mittels Laser eine personalisierte Information geschrieben.

## Patentansprüche

1. Verfahren zur Herstellung eines Polymerschichtverbundes, wobei der Polymerschichtverbund eine Mehrzahl von Polymerschichten aufweist und wobei zumindest eine Polymerschicht eine lasersensitive Komponente enthält, mit den folgenden Verfahrensschritten:
A) auf zumindest eine der Polymerschichten wird eine erste personalisierte Information mittels eines Tintenstrahldruckverfahrens als farbige Tintenstrahl-Druckschicht aufgebracht,
B) die Polymerschicht mit farbiger Tintenstrahl-Druckschicht, welche Polymerschicht eine Polycarbonatschicht ist, wird dann zusammen mit den weiteren Polymerschichten zusammengefügt, wobei die Polymerschicht mit farbiger Tintenstrahl-Druckschicht zwischen zwei anderen Polymerschichten angeordnet ist,
C) mittels Lasergravur wird eine zweite personalisierte Information in den in Stufe B) erhaltenen Polymerschichtverbund eingebracht,
wobei die Tinte der farbigen Tintenstrahldruckschicht eine Zubereitung ist, enthaltend: A) 0,1 bis 20 Gew.-% eines Bindemittels mit einem Polycarbonatderivat , B) 30 bis 99,9 Gew.-% eines Lösungsmittels oder Lösungsmittelgemischs, C) 0 bis 10 Gew.-%, bezogen auf Trockenmasse, eines Farbmittels oder Farbmittelgemischs, D) 0 bis 10 Gew.-% eines funktionales Materials oder einer Mischung funktionaler Materialien, E) 0 bis 30 Gew.-% Additive und/oder Hilfsstoffe, oder einer Mischung solcher Stoffe, wobei die Summe der Komponenten A) bis E) stets 100 Gew.-% ergibt,
wobei das Polycarbonatderivat funktionelle Carbonatstruktureinheiten der Formel (I) enthält, 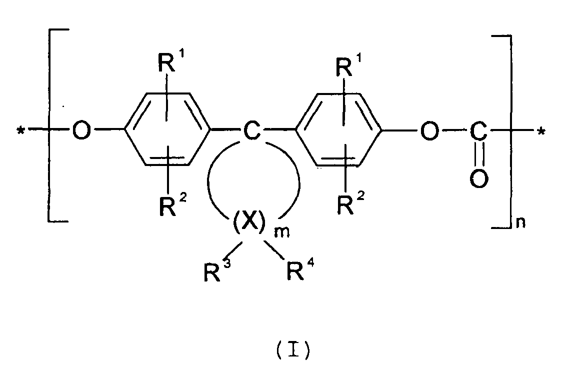 worin R¹ und R² unabhängig voneinander Wasserstoff, Halogen, C₁-C₈-Alkyl, C₅-C₆-Cycloalkyl, C₆-C₁₀-Aryl, und C₇-C₁₂-Aralkyl; m eine ganze Zahl von 4 bis 7; R³ und R⁴ für jedes X individuell wählbar, unabhängig voneinander Wasserstoff oder C₁-C₆-Alkyl; X Kohlenstoff und n eine ganze Zahl größer 20 bedeuten, mit der Maßgabe, dass an mindestens einem Atom X, R³ und R⁴ gleichzeitig Alkyl bedeuten.

2. Verfahren nach Anspruch 1, wobei eine der Polymerschichten einen elektronischen Schaltkreis enthält und wobei eine dritte personalisierte Information vor, zugleich oder nach der Stufe C) in den elektronischen Schaltkreis eingespeichert wird.

3. Verfahren nach Anspruch 1 oder 2, wobei die Polymerschicht mit lasersensitiver Komponente und die Polymerschicht mit farbiger Tintenstrahl-Druckschicht gleich oder verschieden sind.

4. Verfahren nach einem der Ansprüche 1 bis 3, wobei die Polymerschicht mit elektronischem Schaltkreis verschieden von der Polymerschicht oder den Polymerschichten mit Tintenstrahl-Druckschicht und/oder lasersensitiver Komponente ist.

5. Verfahren nach einem der Ansprüche 1 bis 4, wobei in Stufe A auf zwei oder mehr verschiedene Polymerschichten eine personalisierte farbige Tintenstrahl-Druckschicht aufgebracht wird.

6. Verfahren nach Anspruch 5, wobei die farbigen Tintenstrahl-Druckschichten auf verschiedenen Polymerschichten jeweils Teilinformationen der ersten personalisierten Information darstellen und zueinander komplementär und registergenau angeordnet werden.

7. Verfahren nach einem der Ansprüche 1 bis 6, wobei die erste personalisierte Information der Farbanteil einer personalisierten Gesamtbildinformation, und wobei die zweite personalisierte Information der Schwarzanteil der personalisierten Gesamtbildinformation ist.

8. Verfahren nach einem der Ansprüche 1 bis 6, wobei vor der Stufe B) eine optische Prüfung der farbigen Tintenstrahl-Druckschicht oder der farbigen Tintenstrahl-Druckschichten und/oder eine elektronische Prüfung des elektronischen Schaltkreises durchgeführt wird.

9. Polymerschichtverbund, erhältlich mit einem Verfahren der Ansprüche 1 bis 8, aus einer Mehrzahl von Polymerschichten, wobei zwischen zwei Polymerschichten die mittels Tintenstrahldruck hergestellte farbige Tintenstrahl-Druckschicht mit der ersten personalisierten Information angeordnet ist, und wobei in einer der Polymerschichten, enthaltend die lasersensitive Komponente, die mittels Lasergravur herstellte zweite personalisierte Information angeordnet ist.

10. Polymerschichtverbund nach Anspruch 9, wobei eine der Polymerschichten eine elektronische Schaltung enthält, in welcher eine dritte personalisierte Information eingespeichert ist und wobei diese Polymerschicht zwischen zwei anderen Polymerschichten angeordnet ist.

11. Polymerschichtverbund nach Anspruch 9 oder 10, wobei die Polymerschicht mit lasersensitiver Komponente und die Polymerschicht mit farbiger Tintenstrahl-Druckschicht gleich oder verschieden sind.

12. Polymerschichtverbund nach einem der Ansprüche 9 bis 11, wobei die erste personalisierte Information der Farbanteil einer personalisierten Gesamtbildinformation, und wobei die zweite personalisierte Information der Schwarzanteil der personalisierten Gesamtbildinformation ist.

13. Sicherheits- und/oder Wertdokument enthaltend einen Polymerschichtverbund nach einem der Ansprüche 9 bis 12.

14. Verfahren zur Herstellung eines Sicherheits- und/oder Wertdokuments nach Anspruch 13, wobei der Polymerschichtverbund zugleich oder nach der Zusammenfügung der Polymerschichten mit einer Schicht oder mehreren weiteren Schichten auf Basis Papier, Teslin und anderen Verbundmaterialien zusammengefügt wird.

## Claims

1. A method for producing a polymeric layer assembly, the polymeric layer assembly comprising a plurality of polymeric layers, and at least one polymeric layer including a laser-sensitive component, comprising the following steps:
A) on at least one of the polymeric layers is applied, by means of ink jet printing, first personalized information as a colored ink jet printing layer,
B) the polymeric layer with the colored ink jet printing layer, the polymeric layer being a polycarbonate layer, is then joined together with the further polymeric layers, the polymeric layer with the colored ink jet printing layer being arranged between two further polymeric layers,
C) by means of laser engraving, second personalized information is introduced into the polymeric layer assembly obtained in step B),
wherein the ink of the colored ink jet printing layer is a preparation containing: A) 0.1 to 20 wt.% of a binding agent with a polycarbonate derivative, B) 30 to 99.9 wt.% of a solvent or mixture of solvents, C) 0 to 10 wt.%, referred to dry mass, of a coloring agent or a mixture of coloring agents, D) 0 to 10 wt.% of a functional material or a mixture of functional materials, E) 0 to 30 wt.% of additives and/or auxiliary substances, or a mixture of such substances, the sum of the components A) to E) always being 100 %, wherein the polycarbonate derivative contains functional carbonate structure units of Formula (I), 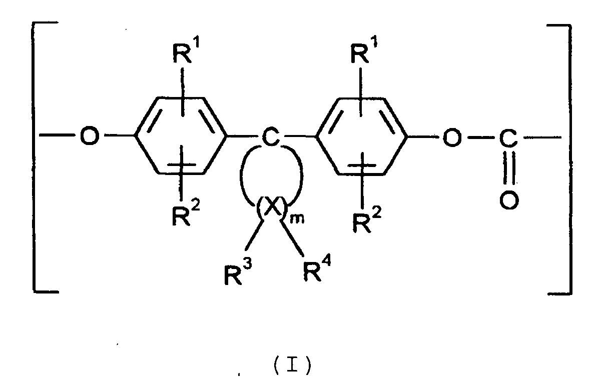
wherein R¹ and R² are independently hydrogen, halogen, C₁-C₈ alkyl, C₅-C₆ cycloalkyl, C₆-C₁₀ aryl, and C₇-C₁₂ aralkyl; m is an integer from 4 to 7; R³ and R⁴ are individually selectable for every X, independently hydrogen or C₁-C₆ alkyl; X is carbon, and n an integer greater than 20, with the proviso that at least at one X atom R³ and R⁴ are simultaneously alkyl.

2. The method according to claim 1, wherein one of the polymeric layers includes an electronic circuitry, and wherein third personalized information is stored in the electronic circuitry before, at the same time as, or after step C).

3. The method according to claim 1 or 2, wherein the polymeric layer including a laser-sensitive component and the polymeric layer including a colored ink jet printing layer are identical or different.

4. The method according to one of claims 1 to 3, wherein the polymeric layer including an electronic circuitry is different from the polymeric layer or polymeric layers including a colored ink jet printing layer and/or a laser-sensitive component.

5. The method according to one of claims 1 to 4, wherein in step A) on two or more different polymeric layers is applied a personalized colored ink jet printing layer.

6. The method according to claim 5, wherein the colored ink jet printing layers on different polymeric layers each represent partial information of the first personalized information and are arranged complementarily and in register with respect to each other.

7. The method according to one of claims 1 to 6, wherein the first personalized information is the color portion of personalized total image information, and the second personalized information is the black portion of the personalized total image information.

8. The method according to one of claims 1 to 6, wherein before step B) an optical inspection of the colored ink jet printing layer or the colored ink jet printing layers and/or an electronic inspection of the electronic circuitry is performed.

9. A polymeric layer assembly, obtainable by a method according to claims 1 to 8, including a multitude of polymeric layers, wherein between two polymeric layers the colored ink jet printing layer produced by means of ink jet printing containing the first personalized information is arranged, and wherein in one of the polymeric layers containing the laser-sensitive component the second personalized information produced by laser engraving is arranged.

10. The polymeric layer assembly according to claim 9, wherein one of the polymeric layers contains an electronic circuitry, in which third personalized information is stored, and wherein this polymeric layer is arranged between two other polymeric layers.

11. The polymeric layer assembly according to claim 9 or 10, wherein the polymeric layer containing the laser-sensitive component and the polymeric layer containing the colored ink jet printing layer are identical or different.

12. The polymeric layer assembly according to one of claims 9 to 11, wherein the first personalized information is the color portion of personalized total image information, and wherein the second personalized information is the black portion of the personalized total image information.

13. A safety and/or value document comprising a polymeric layer assembly according to one of claims 9 to 12.

14. A method for producing a safety and/or value document according to claim 13, wherein the polymeric layer assembly is joined together at the same time or after joining the polymeric layers together with one layer or several other layers based on paper, Teslin and other assembly materials.

## Revendications

1. Procédé de fabrication d'un composite de couches polymères, le composite de couches polymères comprenant une pluralité de couches polymères, et au moins une couche polymère comportant un composant sensible au laser, comprenant les étapes suivantes:
A) sur au moins une des couches polymères est appliquée, au moyen d'impression par jet d'encre, une première information personnalisée sous forme de couche colorée d'impression par jet d'encre,
B) la couche polymère avec la couche colorée d'impression par jet d'encre, la couche polymère étant une couche de polycarbonate, est puis assemblée avec les autres couches polymères, la couche polymère avec la couche colorée d'impression par jet d'encre étant disposée entre deux autres couches polymères,
C) au moyen de gravure au laser, une deuxième information personnalisée est introduite dans le composite de couches polymères obtenu dans l'étape B),
dans lequel l'encre de la couche colorée d'impression par jet d'encre est une composition comportant: A) 0,1 à 20 % en poids d'un liant avec un dérivé de polycarbonate, B) 30 à 99,9 % en poids d'un solvant ou d'un mélange de solvants, C) 0 à 10 % en poids, par rapport à matière sèche, d'un agent colorant ou d'un mélange d'agents colorants, D) 0 à 10 % en poids d'une matière fonctionnelle ou d'un mélange de matières fonctionnelles, E) 0 à 30 % en poids d'additifs et/ou d'adjuvants, ou un mélange de telles substances, la somme des composants A) à E) étant toujours égale à 100 %,
dans lequel le dérivé de polycarbonate comporte des unités de structure de carbonate fonctionnelles selon la formule (I), 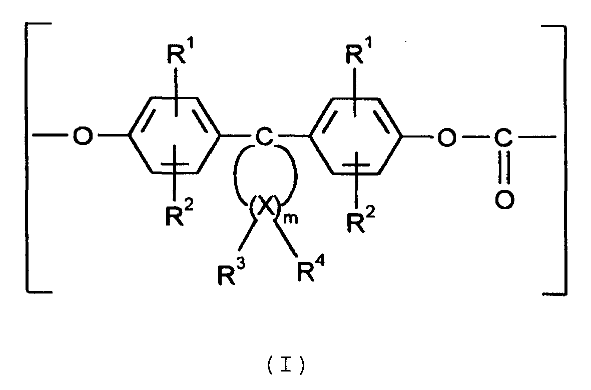 dans lequel R¹ et R² représentent chacun indépendamment l'un de l'autre l'hydrogène, un halogène, un alkyle en C₁-C₈, un cycloalkyle en C₅-C₆, un aryle en C₆-C₁₀, et un aralkyle en C₇-C₁₂; m est un entier allant de 4 à 7; R³ et R⁴ sont individuellement sélectionnables pour chaque X, indépendamment l'un de l'autre de l'hydrogène ou d'un alkyle en C₁-C₆; X est du carbone, et n un entier supérieur à 20, sous réserve qu'au moins à une atome X, R³ et R⁴ soient simultanément de l'alkyle.

2. Procédé selon la revendication 1, dans lequel une des couches polymères comporte un circuit électronique, et dans lequel une troisième information personnalisée est mémorisée dans le circuit électronique avant, au même temps que, ou après l'étape C).

3. Procédé selon la revendication 1 ou 2, dans lequel la couche polymère comportant un composant sensible au laser et la couche polymère comportant la couche colorée d'impression par jet d'encre sont identiques ou différentes.

4. Procédé selon une des revendications 1 à 3, dans lequel la couche polymère comportant un circuit électronique est différente de la couche polymère ou des couches polymères comportant une couche colorée d'impression par jet d'encre et/ou un composant sensible au laser.

5. Procédé selon une des revendications 1 à 4, dans lequel dans l'étape A) sur deux ou plusieurs couches polymères différentes est appliquée une couche personnalisée d'impression colorée par jet d'encre.

6. Procédé selon la revendication 5, dans lequel les couches d'impression colorées par jet d'encre sur des couches polymères différentes chacune représentent des informations partielles de la première information personnalisée et sont disposées de façon complémentaire et en registre entre elles.

7. Procédé selon une des revendications 1 à 6, dans lequel la première information personnalisée est la partie colorée d'une information image personnalisée totale, et la deuxième information personnalisée est la partie noire de l'information image personnalisée totale.

8. Procédé selon une des revendications 1 à 6, dans lequel avant l'étape B) un examen optique de la couche colorée d'impression par jet d'encre en couleur et/ou un examen électronique du circuit électronique est effectué.

9. Composite de couches polymères, susceptible d'être obtenu par un procédé selon les revendications 1 à 8, comportant une multitude de couches polymères, dans lequel entre deux couches polymères la couche colorée d'impression par jet d'encre produite au moyen d'impression par jet d'encre comportant la première information personnalisée est disposée, et dans lequel dans une des couches polymères comportant le composant sensible au laser la deuxième information personnalisée produite par gravure au laser est disposée.

10. Composite de couches polymères selon la revendication 9, dans lequel une des couches polymères comporte un circuit électronique, dans lequel une troisième information personnalisée est mémorisée, et dans lequel cette couche polymère est disposée entre deux autres couches polymères.

11. Composite de couches polymères selon la revendication 9 ou 10, dans lequel la couche polymère comportant le composant sensible au laser et la couche polymère comportant la couche colorée d'impression par jet d'encre sont identiques ou différentes.

12. Composite de couches polymères selon une des revendications 9 à 11, dans lequel la première information personnalisée est la partie colorée d'une information image personnalisée totale, et dans lequel la deuxième information personnalisée est la partie noire de l'information image personnalisée totale.

13. Document de sécurité et/ou de valeur comprenant un composite de couches polymères selon une des revendications 9 à 12.

14. Procédé de fabrication d'un document de sécurité et/ou de valeur selon la revendication 13, dans lequel le composite de couches polymères est assemblé au même temps ou après l'assemblage des couches polymères avec une couches ou plusieurs autres couches sur la base de papier, Teslin et d'autres matériaux d'assemblage.
